# EUROPEAN PATENT APPLICATION

(11) **EP 4 793 900 A1**
(43) Date of publication of application: **19.08.2026**
(21) Application number: 25382130.0
(22) Date of filing: 17.02.2025
(51) Int. Cl.: G06V 10/82, G06V 40/12

(54) **COMPUTER-IMPLEMENTED METHOD FOR CHARACTERIZING A BIOMETRIC FEATURE IN AN IMAGE**

(71) Applicant: Identy Inc., Dover, DE 19901 (US)
(72) Inventor: Vaquero, Carlos, Madrid (ES)
(74) Representative: Grünecker Patent- und Rechtsanwälte PartG mbB

(57) **Abstract**

Computer-implemented method for characterizing a biometric feature in an image, wherein the method comprises: Receiving at least one image comprising at least one biometric feature, wherein the biometric feature is a hand or a foot of a user; Processing the image by a neural network, wherein the neural network is trained based on at least one training image, wherein the training image comprises at least one training biometric feature, wherein the at least one training biometric feature in the training image is hierarchically labeled and/or a characteristic of the training biometric feature in the training image is labeled; Determining by the neural network a region of interest of the biometric feature and relating the region of interest to at least part of the biometric feature.

## Description

The present invention relates to a method for characterizing a biometric feature in an image according to independent claim 1 and a computing device according to independent claim 14.

### Prior art

Extracting biometric features from an image comprising a body part of a user is a process that is known in the prior art. Furthermore, it is known to use the extracted biometric features for authenticating a user, for instance, when granting access to a computing device, such as a mobile computing device, or to specific applications on the computing device.

As the known authentication methods generally do not require that a special operator is present for supporting and assisting a user during the authentication process, additional modules for avoiding possible errors of the user during the process of obtaining an image that may later be used for the authentication process are implemented. Such errors can, for instance, include that the user obtains an image of a wrong biometric feature or of a wrong side of the biometric feature.

In general, these additional modules are, however, implemented as independent components of the method, which requires an additional processing of a detected biometric identifier and results thereby in high computational cost, reduced usability and in a delay of the authentication process.

### Technical problem

Starting from the known prior art, the object of the present invention is to improve the efficiency of the process of characterizing biometric identifiers in images with respect to their suitability for authenticating a user.

### Solution

This problem is solved by the computer-implemented method for characterizing a biometric feature in an image according to independent claim 1 and the computing device according to independent claim 14. Preferred embodiments of the invention are provided in the dependent claims.

The computer-implemented method for characterizing a biometric feature in an image according to the invention comprises:
Receiving at least one image comprising at least one biometric feature, wherein the biometric feature is a hand or a foot of a user;
Processing the image by a neural network, wherein the neural network is trained based on at least one training image, wherein the training image comprises at least one training biometric feature, wherein the at least one training biometric feature in the training image is hierarchically labeled and/or a characteristic of the training biometric feature in the training image is labeled;
Determining by the neural network a region of interest of the biometric feature and relating the region of interest to at least part of the biometric feature.

Receiving at least one image comprising the at least one biometric feature can, for instance, comprise receiving the at least one image from an optical sensor, such as a camera, or a memory of a computing device, such as a mobile computing device, like a smartphone or a tablet. The computing device can, for instance, be the device on which the method is being performed. It is, however, also conceivable that the image is received from a provider computing device that is different from the computing device on which the method is being performed. The provider computing device can, for instance, comprise an optical sensor, like a camera, by means of which the image is taken. In this case, the provider computing device can, for instance, be another mobile computing device or a stationary computing device including an optical sensor. It is, however, also conceivable that the provider computing device does not comprise an optical sensor and the image is being stored on a storage unit of the provider computing device. In this case, the provider computing device can, for instance, be a server computer. The computing device and the provider computing device can, for instance, be connected by a wireless or cable connection.

That the image comprises a biometric feature can mean that the image comprises at least part of the biometric feature. This can mean that the image can also only comprise part of a hand or a foot.

Hierarchically labeling the at least one training biometric feature in the training image can mean that different constituents of the biometric feature, such as different classes of objects comprised in the biometric feature, are assigned different levels of hierarchy. It can, for instance, be provided that elements of a lower hierarchy level are fully comprised in elements of a higher hierarchy level. In case the biometric feature is a hand, the different classes of objects can, for instance, be the hand itself, the fingers of the hand including the thumb and the fingertip of each finger. The hierarchical labeling can, for instance, comprise that the hand itself is assigned a first level of hierarchy. The fingers comprised in the hand can, for instance, be assigned to a second level of hierarchy and the fingertips comprised in the fingers can be assigned a third level of hierarchy. Accordingly, the hand can have a higher hierarchy level than the fingers and the fingers can have a higher hierarchy level than the fingertips. An analogous hierarchical labeling can be provided in case the biometric feature is a foot. In this case, the different classes of objects comprised in the foot can, for instance, be the foot, the five toes and the toe tips. Like for the case of the hand, the foot can, for instance, be assigned to a first level of hierarchy, the toes can be assigned to a second level of hierarchy and the toe tips can be assigned to a third level of hierarchy, whereby the hierarchy level of the first level can be higher than the hierarchy of the second level and the hierarchy of the second level can be higher than the hierarchy level of the third level.

Labeling of the characteristic of the training biometric feature in the training image can mean that the biometric feature and/or at least one constituent of the biometric feature is provided with a label that characterizes the biometric feature and/or the at least one constituent of the biometric feature. This can, for instance, comprise classifying the biometric feature and/or at least one constituent of the biometric feature. For instance, a label can be provided that indicates whether a foreside or a backside of the biometric feature and/or the at least one constituent of the biometric feature is shown in the image. Furthermore, a label can be provided that indicates whether a right hand or foot or a left hand or foot is shown in the image. In addition, also a label can be provided that quantifies the number of biometric features comprised in the image. The just mentioned examples are to be considered exemplary and the biometric feature can also be characterized in any other suitable way.

The region of interest can be understood as a region of the biometric feature in the image that comprises an object that is intended for being used for identifying a user. The region of interest can, for instance, be a region of rectangular form, oval form or any other suitable geometrical form, which comprises the object that is intended for being used for identifying a user. The form of the region of interest can adapt to the form of the object. The region of interest can also be a pixel mask. The region of interest can, for instance, be a region of the hand or foot that comprises a fingertip or a toe tip or a palm or a footprint. The region of interest can, for instance, comprise a single fingerprint or toeprint. The region of interest can, however, also comprise a fingernail of a finger or a toenail of a toe or a knuckle of a backside of a hand.

With the method according to the invention, the region of interest can be related to part of the biometric feature. When relating the region of interest to at least part of the biometric feature, further information about the region of interest can be determined, which can provide an indication as to whether the region of interest qualifies for identifying a user. Based on the relation, an optional subsequent authentication process that uses the region of interest can be made more efficient, as it can already be determined beforehand whether the region of interest qualifies for identifying a user.

In an embodiment, the method further comprises providing, based on the relation between the region of interest and the at least part of the biometric feature, an output indicating whether the biometric feature in the image qualifies for identifying a user. With this, direct feedback can be provided to a user as to whether the biometric feature qualifies for identification purposes or the user can be informed to take another picture of the biometric feature. With this, an optional subsequent authentication process of the user can be made more efficient, as information as to whether the obtained image qualifies for the authentication can already be obtained directly after the image has been obtained and not only during the authentication process.

It can further be provided that the neural network is a single neural network module and/or that the neural network is a vision transformer or a mobile vision transformer. By processing the image by a single neural network, the computational cost associated with the process of relating the region of interest to at least part of the biometric feature can be reduced and the overall efficiency of the method can be improved. A vision transformer is particularly suited for processing information related to objects with different levels of hierarchy and of different size. A vision transformer is therefore a particularly suitable implementation of a neural network. A mobile vision transformer comprises an architecture that is more lightweight than the architecture of a conventional vision transformer, making it particularly suitable for being executed on mobile computing devices with limited computing resources.

In an embodiment, determining the region of interest comprises determining at least one of a location, an orientation, a size of the region of interest. The location, orientation and size allow for a specification of the region of interest within the image and are therefore suitable parameters for specifying the region of interest within the image.

In an embodiment, it can be provided that, if the biometric feature is a hand, the region of interest comprises a fingerprint and if the biometric feature is a foot, the region of interest comprises a toeprint. As the fingerprint and the toeprint are characteristic for a specific user and can be used for identification purposes, these features particularly qualify as a region of interest.

It can furthermore be provided that, if the biometric feature is a hand, relating the region of interest to at least part of the biometric feature comprises determining whether the region of interest is part of a foreside of a hand and comprises a fingerprint or whether the region of interest is part of a backside of a hand and comprises no fingerprint, wherein if the biometric feature is a foot, relating the region of interest to the biometric feature comprises determining whether the region of interest is part of a foreside of a foot and comprises a toeprint or whether the region of interest is part of a backside of a foot and comprises no toeprint. When the region of interest is part of a foreside of a hand and comprises a fingerprint or when the region of interest is part of a foreside of a foot and comprises a toeprint, it can, for instance, be determined that the region of interest qualifies for identifying or authenticating a user. When the region of interest is part of a backside of a hand and comprises no fingerprint, or when the region of interest is part of a backside of a foot and comprises no toeprint, it can be determined that the region of interest does not qualify for identifying or authenticating a user. Respectively relating the region of interest to at least part of the biometric feature therefore allows for determining whether the region of interest qualifies for identifying or authenticating a user.

In an embodiment, it can be provided that, if the biometric feature is a hand, relating the region of interest to at least part of the biometric feature comprises determining whether the region of interest is part of a right or a left hand, wherein if the biometric feature is a foot, relating the region of interest to at least part of the biometric feature comprises determining whether the region of interest is part of a right or left foot. To further specify the region of interest with respect to a right or left hand or a right or left foot, the region of interest can be provided with a respective index. By providing such accordingly indexed region of interest, an authentication or identification process, where the region of interest is generally compared to a reference region of interest can be made more efficient as, due to the indexing of the region of interest, the region of interest has only to be compared to a group of reference region of interests having the same index.

It can also be provided that if the biometric identifier is a hand, relating the region of interest to at least part of the biometric feature comprises relating the region of interest to a specific finger, such as an index, a middle, a ring, a little finger or a thumb, wherein if the biometric identifier is a foot, relating the region of interest to at least part of the biometric feature comprises relating the region of interest to a specific toe, such as a first, a second, a third, a fourth or a fifth toe. By accordingly indexing the region of interest, an authentication or identification process based on the region of interest can be made more efficient, as the region of interest only needs to be compared with reference regions of interest having the same index.

In an embodiment, it can be provided that if the biometric feature is a hand, the characteristic of the training biometric feature is a right hand, a left hand, a left and right hand, a foreside of a hand and/or a backside of a hand, wherein if the biometric feature is a foot, the characteristic of the training biometric feature is a right foot, a left foot, a left and right foot, a foreside of a foot and/or a backside of a foot. By labeling the respective characteristics of the training biometric feature in the training image, the neural network can be specifically trained for recognizing the respective characteristics. With this, a neural network can be provided that is specifically adapted to relate the region of interest to the respective characteristics in an image.

It can also be provided that the hierarchical labeling comprises a number of levels of hierarchy, wherein a level of hierarchy comprises a class of object of the biometric feature, wherein if a level of hierarchy is higher than another level of hierarchy, a class of object of the other level of hierarchy is comprised in a class of object of the level of hierarchy. The number of levels of hierarchy can be flexibly chosen based on the biometric feature and the specific requirements of the method.

It can be provided that the hierarchical labeling comprises two levels of hierarchy, wherein a first level of hierarchy comprises a first class of object and a second level of hierarchy comprises a second class of object, wherein, optionally, if the biometric feature is a hand, the first class of object is a hand and the second class of object is a finger or a fingertip, wherein, optionally, if the biometric feature is a foot, the first class of object is a foot and the second class of object is a toe or a toe tip. With this, a specific implementation of the hierarchical labeling can be provided.

It can also be provided that the hierarchical labeling comprises three levels of hierarchy, wherein a first level of hierarchy comprises a first class of object, a second level of hierarchy comprises a second class of object and a third level of hierarchy comprises a third class of object, wherein, optionally, if the biometric feature is a hand, the first class of object is a hand, the second class of object is a finger and the third class of object is a fingertip, wherein, optionally, if the biometric feature is a foot, the first class of object is a foot, the second class of object is a toe and the third class of object is a toe tip. With this, another specific implementation of the hierarchical labeling can be provided.

In an embodiment, the neural network is further trained based on at least one cost function, wherein the cost function comprises at least one of a first cost function for determining a region of interest of a biometric feature and classifying whether the region of interest is part of a foreside of a hand or a backside of a hand, a second cost function for determining a hand and classifying the hand as a backside of a hand or a foreside of a hand, a third cost function for determining whether the image comprises a left hand, a right hand or a left and a right hand.

According to the invention, also a computing device comprising a processor, a storage device and an image sensor is provided, wherein computer readable instructions are stored on the storage device, which when executed can use the computing device to perform the method according to any of the embodiments of the method detailed above.

In an embodiment, the computing device can be a mobile computing device. The mobile computing device can, for instance, be a smartphone or a tablet.

### Brief description of the drawings

- Fig. 1:: Flowchart of a computer-implemented method for characterizing a biometric feature in an image according to an embodiment
- Fig. 2:: Flowchart of a training process of a neural network according to one embodiment
- Fig. 3:: Schematic depiction of a computing device according to one embodiment

### Detailed description of the drawings

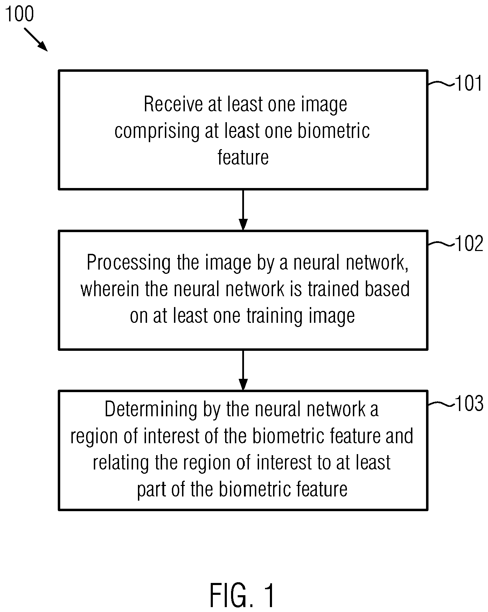

Fig. 1 shows a flowchart 100 of a computer-implemented method for characterizing a biometric feature in an image.

The computer-implemented method 100 can be performed on a computing device, such as a stationary computing device or a mobile computing device. The mobile computing device can, for instance, be a smartphone or a tablet.

It can be provided that all steps of the method are performed on the computing device, meaning that the computing device does not have to be connected to another computing device for performing the method. Nevertheless, a data connection between the computing device and another device, such as a server computer, can be present.

It can, however, also be provided that certain steps of the method are executed by the computing device and certain steps are executed by another remote computing device, which may be connected to the computing device by a data connection, such as a cable or a wireless connection.

The method 100 begins with step 101, where at least one image comprising at least one biometric feature is received. The biometric feature is a hand or a foot of a user. The image can, for instance, comprise one or two hands. Alternatively, the image can also comprise one or two feet. Also, an image comprising one hand and one foot or any other combination of the mentioned biometric features is possible. The image can also comprise more than two biometric features.

That the image comprises a biometric feature can mean that the image comprises at least part of the biometric feature. Consequently, the image can also only comprise part of a hand or foot.

The image can be received from an optical sensor, such as a camera, or from a memory of the computing device. It is also conceivable that the image is received from another computing device which is different from the computing device on which the method or at least part of the steps of the method are being performed. The other computing device can also comprise an optical sensor and a memory and the image can be received either from the optical sensor or the memory.

The received image can be a color image or a black and white image. Optionally, it can also be provided that, in case a color image is received, the color image is transformed into a black and white image while the image is processed by the method.

As indicated above, the method comprises receiving at least one image. In case more than one image is received, it can be provided that the images are received in certain time intervals. The time intervals with which the images are received can be constant or vary from image to image. It can also be provided that a number of images are received in form of a video.

As described above, the received image comprises at least one biometric feature, wherein the biometric feature is a hand or a foot of a user. It is, however, also possible that the method receives an image that does not comprise a biometric feature. Such image may, however, be disregarded by the method, as the method is provided for characterizing a biometric feature in an image.

If the method, for example, receives an image that does not comprise a biometric feature, the method can provide a request for an image to be provided that comprises a biometric feature. In case the computing device comprises an optical sensor, a user may, for instance, be requested to take another image comprising a biometric feature. If the image was received from a memory of the computing device or a memory of another computing device, the method may provide a request to an entity of the respective computing device for providing another image comprising a biometric feature.

In the subsequent step 102 of the method, the image is processed by a neural network, wherein the neural network is trained based on at least one training image.

The neural network can, for instance, be a vision transformer or a mobile vision transformer. A vision transformer is particularly suited for processing information related to objects with different levels of hierarchy and of different size. A vision transformer is therefore a particularly suitable implementation of a neural network. A mobile vision transformer comprises an architecture that is more lightweight than the architecture of a conventional vision transformer, making it particularly suitable for being executed on mobile computing devices with limited computing resources. The just mentioned specific implementations of the neural network are to be considered exemplary. Also, any other neural network that is suitable for performing the method described in the context of the embodiment of Fig. 1 may be used.

It can furthermore be provided that the image is processed by a single neural network. By processing the image by a single neural network, the computational cost associated with the processing of the image can be reduced and the overall efficiency of the method can be improved.

The training image comprises at least one training biometric feature, and the at least one training biometric feature in the training image is hierarchically labeled and/or a characteristic of the training biometric feature in the training image is labeled.

Hierarchically labeling the training biometric feature in the training image can mean that different classes of objects comprised in the biometric feature are confined within a respective boundary, such as a box, an oval or another suitable geometrical form and that the respective boundaries are provided with a label which indicates the hierarchy level of the object comprised in the respective boundary. For instance, a boundary for a specific class of object can be provided with a specific index, such that the different classes of objects can be distinguished by the respective index of the boundary. If, for instance, the biometric feature is a hand, the class of object comprised in the hand can be a hand, a finger or a fingertip. In case the biometric feature is a foot, the class of object comprised in the foot can be a foot, a toe or a toe tip. The just mentioned classes of objects comprised in the hand or foot are exemplary and also other classes of objects comprised in the hand or foot may be chosen.

The hierarchical labeling can comprise a number of levels of hierarchy, wherein a specific level of hierarchy can be assigned to a specific class of object of the biometric feature. It can, for instance, be provided that if a level of hierarchy of a class of objects is higher than a level of hierarchy of another class of objects, an object of the other class of objects is comprised in an object of the class of objects that has the higher level of hierarchy. That the other class of objects is comprised in the class of object can, for instance, mean that pixels of the image that describe the object of the other class are a subset of the pixels that describe the object of the class of objects with a higher level of hierarchy. Consequently, with increasing level of hierarchy of the class of objects, also the size of the objects of the respective class increases.

As described above, the different classes of objects can be labeled by means of a boundary, such as different boxes, ovals or any other suitable geometrical form. In the following, it is assumed that the classes of objects are confined in a box. It is, however, also possible to confine the object in an oval or any other suitable geometrical form. If a certain class of object has now a higher level of hierarchy than another class of object, the box (or on a more general note the boundary) confining an object of the other class of objects is comprised in the box (or on a more general note the boundary) confining an object of the class of objects with the higher level of hierarchy.

If the hierarchical labeling comprises, for instance, two levels of hierarchy, a first level of hierarchy can comprise a first class of object and a second level of hierarchy can comprise a second class of object.

If the biometric feature is a hand, the first class of object can, for instance, be a hand and the second class of object can be a finger or a fingertip. As the finger or fingertip is fully comprised in the hand, the hand can be assigned a higher level of hierarchy than the finger or the fingertip. To label the first and second class of object, the hand can be confined in a first box, which is labeled with a first index and each of the fingers can be confined in a second box labeled with a second index. It can, for instance, be provided that with decreasing level of hierarchy, the value of the index increases. In this case, the first box, in which the hand is confined, can, for instance, be labeled with a first index i₁ = 0 and the second box, in which a finger or fingertip is confined, can, for instance be labeled with a second index i₂ = 1. This specific choice of indices is exemplary. It can, for instance, also be provided that the value of the index increases with an increasing level of hierarchy. As the level of hierarchy of the first box, in which the hand is confined, is higher than the level of hierarchy of the second box, in which a finger is confined, each of the second boxes can be comprised in the first box. As already described above, this can mean that the pixels of the image associated with each of the second boxes are a subset of the pixels associated with the first box.

If the biometric feature is a foot, the first class of object can be a foot and the second class of object can be a toe or a toe tip. As the toe or the toe tip is fully comprised in the foot, the foot can be assigned a higher level of hierarchy than the toe or the toe tip. Analogously to the case of the hand, the foot can be confined in a first box and each of the toes or each of the toe tips can be confined in a second box, whereby the first box is labeled with a first index and each of the second boxes is labeled with a second index. Analogously to the case of the hand discussed above, each of the second boxes can be comprised in the first box.

The above described embodiment, where the hierarchical labeling comprises two levels of hierarchy and the specific choice of the two levels of hierarchy, is exemplary. Also, any other number of levels of hierarchy can be provided.

In another embodiment it can, for instance, be provided that the hierarchical labeling comprises three levels of hierarchy, wherein a first level of hierarchy comprises a first class of object, a second level of hierarchy comprises a second class of object and a third level of hierarchy comprises a third class of object.

If the biometric feature is a hand, the first class of object can, for instance, be a hand, the second class of object can be a finger and the third class of object can be a fingertip. The hand can thereby be confined in a first box labeled with a first index, each finger can be confined in a second box labeled with a second index and each fingertip can be confined in a third box labeled with a third index. Each of the third boxes confining a fingertip can thereby be comprised in a respective second box confining a finger and each of the second boxes can in turn be comprised in the first box confining the hand. Accordingly, the first class of object, i.e. the hand, has a higher level of hierarchy than the second class of object, i.e. the fingers, and the second class of object has a higher level of hierarchy than the third class of object, i.e. the fingertips.

If the biometric feature is a foot, the first class of object can, for instance, be a foot, the second class of object can be a toe and the third class of object can be a toe tip. The foot can thereby be confined in a first box labeled with a first index, each of the toes can be confined in a second box labeled with a second index and each of the toe tips can be confined in a third box labeled with a third index. Each of the third boxes can thereby be comprised in a respective second box and each of the second boxes can be comprised in the first box, which is indicative of the foot confined in the first box having a higher level of hierarchy than the toes comprised in the second boxes and the toes comprised in the second boxes having a higher level of hierarchy than the toe tips confined in the third boxes.

In addition or alternatively, also characteristics of at least part of the biometric feature can be labeled in the training image. Labeling of the characteristic of the training biometric feature in the training image can mean that the biometric feature and/or at least one constituent of the biometric feature is provided with a label that characterizes the biometric feature and/or the at least one constituent of the biometric feature.

If the biometric feature is a hand, labeling the characteristic of the biometric feature can comprise labeling the hand as a right or left hand, labeling the hand as a foreside of a hand or backside of a hand, labeling the fingers of the hand as a finger foreside or finger backside, labeling the fingers as thumb, index finger, middle finger, ring finger or small finger and labeling the fingertip as a fingerprint or fingernail.

If the labeling of the biometric characteristics is performed in addition to the hierarchical labeling, each of the boundaries in which the different classes of objects in the image are confined and hierarchically labeled can be provided with an additional label indicating a characteristic of the respective object confined in the respective boundary.

In this case, labeling of the characteristic of the biometric feature can, for instance, mean that the boundary in which the hand is confined is provided with another label indicating whether the hand is a right or a left hand. Additionally or alternatively, the boundary in which the hand is confined can also be provided with a label specifying whether the hand is a foreside of a hand or a backside of a hand. The boundaries in which the fingers are confined can be provided with a label indicating whether the finger in the respective boundary is a thumb, an index, a middle, a ring or a small finger. Furthermore, each boundary confining a finger can be provided with a label indicating whether the side of the respective finger shown in the image is a foreside of a finger or a backside of a finger. With respect to the boundaries confining the fingertips, each boundary confining a fingertip can be provided with a label indicating whether the fingertip within the respective boundary comprises a fingerprint or a fingernail.

In case the biometric feature is a foot, labeling the characteristic of the biometric feature can mean that the boundary in which the foot is comprised is provided with an additional label indicating whether the foot comprised in the boundary is a right foot or a left foot. Alternatively or additionally, the boundary in which the foot is comprised can be provided with another label indicating whether the foot is a foreside of a foot or a backside of a foot. The boundaries in which the toes are confined can be provided with a label indicating whether a toe in a boundary is a first toe, a second toe, a third toe, a fourth toe or a fifth toe. Each boundary in which a toe tip is confined can be provided with a label indicating whether the toe tip comprises a toenail or a toeprint.

Labeling a characteristic of at least part of the biometric feature can also comprise providing the whole image with a label, wherein the label can characterize the biometric feature and the classes of objects comprised in the biometric feature. The image label can, for instance, specify whether a left, a right or both hands are shown in the image and which fingers of the respective hand are shown in the image. The image label can, for instance, further specify that the image comprises a single left hand and that all fingers of the left hand are shown in the image. Alternatively, the image label can also specify that the image comprises a single left hand and that only a subset of the fingers, such as index finger, middle finger and ring finger or any other subset of fingers is shown in the image. Alternatively, the image label can also specify that the image shows a single right hand and that all fingers of the single right hand or only a subset of the fingers of the single right hand are shown in the image. The image label can, for instance, also specify that the image comprises two hands, such as a left and a right hand, and that all of the fingers of each hand or all of the fingers of one hand and a subset of fingers of the other hand or a subset of the fingers of the one hand and a subset of the fingers of the other hand are shown in the image.

By training the neural network with an accordingly labeled image, the trained neural network is specifically adapted to assign different classes of objects of the biometric feature with a hierarchical label and to establish hierarchical relations between the different classes of objects comprised in the biometric feature in the image. Furthermore, the trained neural network can determine characteristics of at least parts of the biometric feature and label the characteristics accordingly.

Training of the neural network can furthermore comprise training the neural network based on at least one cost function, wherein the cost function comprises at least one of a first cost function for determining a region of interest of a biometric feature and classifying whether the region of interest is part of a forehand or a backhand, a second cost function for determining a hand and classifying the hand as a backside of a hand or a foreside of a hand, a third cost function for determining whether the image comprises a left hand, a right hand or a left and a right hand.

The region of interest can, for instance, comprise a finger, a fingertip, a toe or a toe tip. In a more specific implementation, the region of interest can, for instance, be a fingerprint, a fingernail, a finger knuckle or a toeprint, a toenail or a toe knuckle.

By training the neural network based on a respective training image, the neural network can learn relations between positions and orientations of hands, fingers and fingertips as well as relations between positions and orientations of feet, toes and toe tips.

The accordingly trained neural network can then determine in step 103 a region of interest of the biometric feature. The region of interest can, for instance, be a region of the biometric feature that is intended for being used for identifying a user. The region of interest can, for instance, be a region of the image that comprises a single finger or fingertip or a region of the image that comprises a single toe or toe tip. The region of interest can thus correspond to a boundary determined by the trained neural network, in which a single finger or fingertip or a single toe or toe tip is comprised.

Determining the region of interest in step 103 can comprise determining at least one of a location, an orientation, a size of the region of interest. As described above, the region of interest can be confined within a boundary, such that determining at least one of a location, an orientation and a size of the region of interest can comprise determining at least one of a location, an orientation or a size of the boundary confining the region of interest. Determining the location can, for instance, comprise determining a center point of the boundary confining the region of interest and/or determining a number of perimeter points of the boundary confining the region of interest. Determining an orientation of the region of interest can, for instance, comprise determining an angle by which the region of interest is twisted with respect to a reference region of interest that is aligned along a reference direction. The twist can, for instance, also be determined based on a twist of a finger or a fingertip (or a toe or a toe tip) of the region of interest with respect to a reference finger or fingertip (or toe or toe tip), which is vertically aligned. A size of the region of interest can be determined by calculating the area the region of interest occupies in the image. The area of the region of interest can, for instance, be calculated based on the number of pixels comprised in the region of interest.

In step 103, the neural network furthermore relates the region of interest to at least part of the biometric feature.

In case the biometric feature is a hand, relating the region of interest to at least part of the biometric feature can, for instance, comprise that the neural network relates the region of interest to a foreside or backside of a hand or foot or to a foreside or backside of a finger or toe or to a foreside or backside of a fingertip or a toe tip. Based on the relation between the region of interest and the part of the biometric feature, it can then, for instance, be determined whether the region of interest is part of a forehand or a backhand and the region of interest can be further specified based on this determination as a fingerprint or nail.

Relating the region of interest to at least part of the biometric feature can, furthermore, comprise that the region of interest is related to an index finger, middle finger, ring finger, small finger or thumb.

In case the biometric feature is a foot, relating the region of interest to at least part of the biometric feature can comprise relating the region of interest to a first toe, a second toe, a third toe, a fourth toe or a fifth toe. Additionally or alternatively, relating the region of interest to at least part of the biometric feature can also comprise relating the region of interest to a left or right foot and/or to a backside or a foreside of the foot.

If the region of interest is related to a backside or foreside of a foot, it can be determined whether the region of interest corresponds to a toeprint, which is located on the foreside of a foot, or to a toenail or knuckle, which is located on the backside of the foot.

By relating the region of interest to at least part of the biometric feature, it can be further specified to which part of the hand or the foot the region of interest corresponds. With this, further information can be provided with respect to the region of interest, based on which it may be determined in an optional subsequent step as to whether the region of interest qualifies for identifying a user.

If an authorization process, for instance, requires that the authorization is performed by a fingerprint, only regions of interest that are part of a foreside of a fingertip, finger or hand may qualify for the authentication, while regions of interest, such as a fingernail or a knuckle, that are part of a backside of a fingertip, a finger or hand may not qualify for the authorization process.

Based on the relation between region of interest and at least part of the biometric feature, an authorization process can be made more efficient, as it can already be determined beforehand whether a region of interest qualifies for identifying a user. If, for instance, a region of interest is determined to not qualify for identifying a user, another image may be requested that comprises a suitable region of interest. It may, for instance, also be the case that, based on the region of interest that does qualify for identifying a user, specific instructions are provided to the user on how to obtain an image comprising a biometric identifier that qualifies for identifying a user.

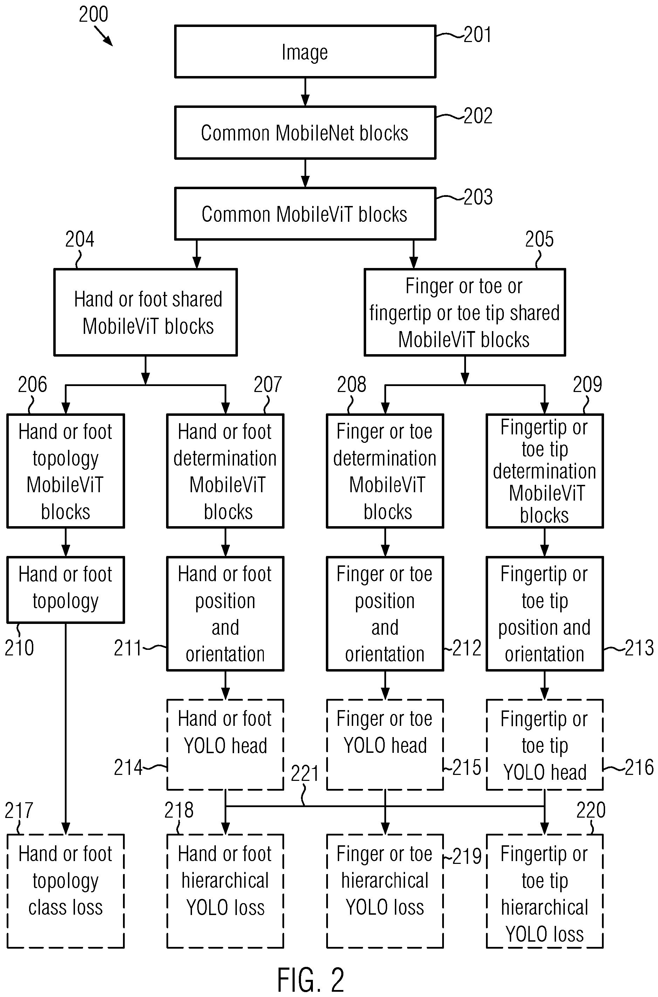

The training process of the neural network is further specified in the context of Fig. 2, which shows an architecture of a neural network as it can be employed in the context of the embodiment of Fig. 1. The specific implementation of the neural network as discussed in the context of Fig. 2 is to be considered exemplary and also any other suitable neural network structure for performing the method described in the context of the embodiment of Fig. 1 may be used.

The neural network detailed in the embodiment of Fig. 2 is a mobile vision transformer including common MobileNet blocks 202 as input layers with subsequently arranged common MobileViT blocks 203, i.e. mobile vision transformer blocks.

The common MobileNet blocks 202 can comprise at least one convolutional neural network layer. After the common MobileViT blocks 203, the output of the neural network is provided. During the training process of the neural network, YOLO heads can be arranged after specific MobileViT blocks. After the YOLO heads, classification losses can be provided.

In the following, the structure of the exemplary neural network is discussed in detail.

In step 201, at least one image is provided to the neural network, wherein the image can comprise at least one biometric feature. During the training process of the neural network, the image can be a specifically labeled training image comprising at least one training biometric feature. The training biometric feature can, for instance, be a hand or a foot. As explicitly discussed in the context of Fig. 1, the training biometric feature is hierarchically labeled and/or a characteristic of the training biometric feature in the training image is labeled.

During the training process of the neural network, the image is at first processed by common MobileNet building blocks 202, which comprise at least one convolutional neural network layer.

During the training process, the layers of the common MobileNet blocks 202 can learn how to detect and extract a biometric feature comprised in an image and different classes of objects comprised in the biometric feature. During the training, the common MobileNet blocks 202 can be specifically adapted to learn how to detect and extract a hand, a finger of the hand or a fingertip of a hand. The common MobileNet blocks 202 can, furthermore, learn how to detect more specific features of the hand, such as a fingerprint, a fingernail, a knuckle of the hand or a palm. The MobileNet blocks 202 can furthermore learn how to detect and extract a foot, a toe of the foot or a toe tip of the toe. It can also be provided that the common MobileNet blocks 202 learn how to detect and extract more specific features of the foot, such as a toeprint, a toenail, a knuckle of the foot or a footprint. The above outlined training process of the common MobileNet blocks 202 is to be considered exemplary. Also any other suitable training process by means of which the common MobileNet blocks 202 can be trained towards an intended global task may be applied.

The common MobileNet blocks 202 can furthermore learn during the training process how to determine a position, an orientation and/or a size of the just mentioned biometric features comprised in the image and the classes of objects comprised in the respective biometric feature.

In addition, the common MobileNet blocks 202 can learn during training how to classify the biometric feature and the different classes of objects comprised in the biometric feature. Classification of the biometric feature has already been discussed in detail in the context of the embodiment of Fig. 1 and can, for instance, comprise determining whether a foreside or backside of a hand or a foot or a right or left hand or right or left foot is shown in the image.

If accordingly trained, the common MobileNet blocks 202 are adapted to downsample and filter an image and extract above specified features from the image.

After the common MobileNet blocks 202, common MobileViT blocks 203 can be provided that are intended for performing a task of hierarchically labeling the biometric feature and the classes of objects comprised in the biometric feature. During the training process, the common MobileViT blocks 203 can thus be trained to provide the respective classes of objects comprised in the biometric feature with a respective hierarchical label. If the image comprises a hand, the MobileViT blocks 203 can, for instance, assign a first level of hierarchy to the hand, a second level of hierarchy to the fingers comprised in the hand and a third level of hierarchy to the fingertips comprised in each finger. If the image comprises a foot, the common MobileViT blocks 203 can, for instance, assign a first level of hierarchy to a foot, a second level of hierarchy to the toes comprised in the foot and a third level of hierarchy to the toe tips comprised in the toes. The above outlined training process of the common MobileViT blocks 203 is exemplary. Also any other suitable training process by means of which the common MobileViT blocks 203 can be trained towards an intended global task may be applied.

After the common MobileViT blocks 203, more specific MobileViT blocks 204, 205 can be arranged that are intended for extracting and merging information from the image that can be used for determining a position, orientation and/or topology of the biometric feature or an object comprised in the biometric feature.

Specifically, hand or foot shared MobileViT blocks 204 can be arranged after the common MobileViT blocks 203. The hand or foot shared MobileViT blocks 204 can be intended for extracting and merging information from the output provided by the common MobileViT building blocks 203 for determining a position, orientation and topology of a hand or a foot.

Furthermore, finger or toe or fingertip or toe tip shared MobileViT blocks 205 can be arranged after the common MobileViT blocks 203. The finger or toe or fingertip or toe tip shared MobileViT blocks 205 can be intended for extracting and merging information from the output provided by the common MobileViT 203 blocks for determining a position and an orientation of a finger, fingertip, toe or toe tip.

For determining a topology of a hand or foot, hand or foot topology MobileViT blocks 206 can be arranged after the hand or foot shared MobileViT blocks 204. The hand or foot topology MobileViT blocks 206 can be intended for further processing the output provided by the hand or foot shared MobileViT blocks 204 and specifically determine a topology of the hand or foot in the image. If the biometric feature is a hand, hand topology MobileViT blocks can, for instance, determine whether the image comprises a left hand, a right hand, both hands, a left thumb, a right thumb, both thumbs, a left hand palm, a right hand palm, both hand palms as well as any other suitable topology of the hand. Analogously, in case the biometric feature is a foot, the foot topology MobileViT blocks can, for instance, determine whether the image comprises a left foot, a right foot, both feet, a right first toe, a left first toe, both toes, a left foot sole, a right foot sole or both foot soles.

The determined hand or foot topology can be provided as output 210.

After the hand or foot shared MobileViT blocks 204, furthermore hand or foot determination MobileViT blocks 207 can be arranged. The hand or foot determination MobileViT blocks 207 can be intended for detecting a hand and a foot and to determine a position, size and/or orientation of the hand or foot. The hand or foot determination MobileViT blocks 207 can furthermore be intended for determining whether the image comprises a foreside or a backside of the hand or foot.

The determined hand or foot position, size and/or orientation can be provided as output 211 by the hand or foot determination MobileViT blocks 207.

After the finger or toe or fingertip or toe tip shared MobileViT blocks 205, finger or toe determination MobileViT blocks 208 and fingertip or toe tip determination MobileViT blocks 209 can be provided.

The finger or toe determination MobileViT blocks 208 can be intended for detecting a finger or toe and be specifically intended for determining the position, size and/or orientation of the finger or the toe. Furthermore, the finger or toe determination MobileViT blocks 208 can be intended for determining whether a foreside or backside of a finger or toe is shown in the image.

The determined finger or toe position, size and/or orientation can be provided as output 212.

The fingertip or toe tip determination MobileViT blocks 209 can be intended for detecting fingertips or toe tips and for determining a size, position and/or orientation of a fingertip or a toe tip. Furthermore, the fingertip or toe tip determination MobileViT blocks 209 can be intended for determining whether a foreside of the fingertip, and therefore a fingerprint, or a backside of the fingertip, and therefore a fingernail, is comprised in the image.

The determined fingertip or toe tip position, size and/or orientation can be provided as output 213.

After each of the determination modules 207, 208, 209 a respective YOLO head 214, 215, 216 can be arranged, which can further process the output 211, 212, 213 provided by the respective determination module. By providing independent YOLO heads behind each of the determination modules, once trained, the neural network can establish hierarchical relations between different classes of objects comprised in the biometric feature. By contrast, if only a single YOLO head would be provided after all the detection modules, a detected object could only be assigned with a single class, but no relations between objects that are comprised in each other and therefore no hierarchical relations can be determined.

After each YOLO head 214, 215 and 216, a respective hierarchical YOLO loss can be provided. Specifically a hand or foot hierarchical YOLO loss 218, a finger or toe hierarchical YOLO loss 219 and a fingertip or toe tip hierarchical YOLO loss 220 can be provided. The three YOLO losses can be interconnected with 221, meaning that the outputs provided by the other YOLO heads are taken into account when determining a specific YOLO loss. For instance, when the fingertip or toe tip hierarchical YOLO loss 220 is determined, the finger or toe 219 and the hand or foot hierarchical YOLO loss 218 are taken into account. This allows the neural network to learn hierarchies during the learning process.

After the hand or foot topology MobileViT blocks 206, a hand or foot topology class loss 217 can be determined based on the hand or foot topology 210 output of the hand or foot topology MobileViT blocks 206.

In general, the penalty of a YOLO loss of a detected fingertip will increase when the detected fingertip is slightly larger than the actual fingertip. When adding hierarchy information, the penalty of the fingertip YOLO loss 220 can, for instance, be increased when a detected fingertip is not entirely within a detected hand or finger since, according to the hierarchical definition of a hand, finger and fingertip, all detected fingertips should be comprised within a finger and all detected fingers should be comprised within a hand. Accordingly, the penalty of a toe tip YOLO loss can, for instance, be increased when a detected toe tip is not entirely within a detected toe or foot. This applies accordingly to other classes of objects, such as fingers or toes, fingerprints or toeprints and palm prints and footprints.

Furthermore, it is conceivable to add penalties when two different levels of hierarchy, for instance a hand and a fingertip, are assigned to different sides of the hand, i.e. foreside and backside. This can, for instance, be the case when a fingertip is assigned to a backside of the fingertip and the respective finger, in which the fingertip is comprised, is assigned to a foreside of the finger.

The neural network can thus learn to not only classify a specific object but also to learn information pertaining to the hierarchy of different objects. This way, the robustness of the neural network can be increased, even when undesired outputs and unnecessary components are removed after training.

For instance, even if the hand or foot determination MobileViT blocks 207 and the finger or toe determination MobileViT blocks 208 are removed after training, the respectively trained neural network with the fingertip and toe tip determination module can, due to the hierarchical training, still relate the detected fingertip or toe tip to a characteristic of an object with a higher hierarchy level, such as to a foreside or backside of a hand or foot.

As the process of relating the region of interest to at least part of the biometric feature can be performed by a single neural network, the efficiency of the related process can be enhanced, as it is not necessary to use two separate neural networks for this task.

In addition, a higher coherence between the outputs generated by the single neural network can be achieved as compared to the case where two neural networks are employed for fulfilling this task. This is because an accordingly trained single neural network is aware of the hierarchical relations between the different classes of objects comprised in the biometric feature.

Finally, the single neural network is more robust, as even if certain blocks, such as the hand and finger detection blocks are removed, the common blocks of the neural network comprise encoded information on the presence of hands and fingers.

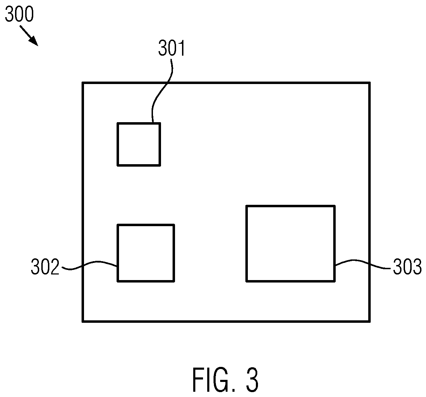

Fig. 3 shows an embodiment of a computing device 300 on which the method for characterizing a biometric feature as discussed in the context of Fig. 1 and the trained neural network discussed in the context of Fig. 2 can be implemented.

The computing system 300 detailed in Fig. 3 can be a stationary or a mobile computing device. The mobile computing device can, for instance, be a smartphone or a tablet. The computing device can comprise a processor 301 and a memory 302, such as a non-volatile memory.

The memory can comprise instructions that, when executed by the processor, cause the processor to perform the computer-implemented method as described in the embodiment of Fig. 1.

Optionally, the computing device can furthermore comprise an optical sensor 303 for obtaining an image. The optical sensor 303 can, for instance, be a camera, which can be adapted to take an image of a body part of a user, such as a hand or a foot.

When executing the method discussed in the context of the embodiment of Fig. 1, the computing device can, for instance, be employed for authenticating a user.

## Claims

1. Computer-implemented method for characterizing a biometric feature in an image, wherein the method comprises:
- Receiving at least one image comprising at least one biometric feature, wherein the biometric feature is a hand or a foot of a user;
- Processing the image by a neural network, wherein the neural network is trained based on at least one training image, wherein the training image comprises at least one training biometric feature, wherein the at least one training biometric feature in the training image is hierarchically labeled and/or a characteristic of the training biometric feature in the training image is labeled;
- Determining by the neural network a region of interest of the biometric feature and relating the region of interest to at least part of the biometric feature.

2. Computer-implemented method according to claim 1, wherein the method further comprises providing, based on the relation between the region of interest and the at least part of the biometric feature, an output indicating whether the biometric feature in the image qualifies for identifying a user.

3. Computer-implemented method according to claim 1 or 2, wherein the neural network is a single neural network module and/or wherein the neural network is a vision transformer or a mobile vision transformer.

4. Computer-implemented method according to one of claims 1 to 3, wherein determining the region of interest comprises determining at least one of a location, an orientation, a size of the region of interest.

5. Computer-implemented method according to one of claims 1 to 4, wherein if the biometric feature is a hand, the region of interest comprises a fingerprint, wherein if the biometric feature is a foot, the region of interest comprises a toeprint.

6. Computer-implemented method according to one of claims 1 to 5, wherein if the biometric feature is a hand, relating the region of interest to at least part of the biometric feature comprises determining whether the region of interest is part of a foreside of a hand and comprises a fingerprint or whether the region of interest is part of a backside of a hand and comprises no fingerprint, wherein if the biometric feature is a foot, relating the region of interest to the biometric feature comprises determining whether the region of interest is part of a foreside of a foot and comprises a toeprint or whether the region of interest is part of a backside of a foot and comprises no toeprint.

7. Computer-implemented method according to one of claims 1 to 6, wherein if the biometric feature is a hand, relating the region of interest to at least part of the biometric feature comprises determining whether the region of interest is part of a right or a left hand, wherein if the biometric feature is a foot, relating the region of interest to at least part of the biometric feature comprises determining whether the region of interest is part of a right or left foot.

8. Computer-implemented method according to one of claims 1 to 7, wherein if the biometric identifier is a hand, relating the region of interest to at least part of the biometric feature comprises relating the region of interest to a specific finger, such as an index, a middle, a ring, a little finger or a thumb, wherein if the biometric identifier is a foot, relating the region of interest to at least part of the biometric feature comprises relating the region of interest to a specific toe, such as a first, a second, a third, a fourth or a fifth toe.

9. Computer-implemented method according to one of claims 1 to 8, wherein if the biometric feature is a hand, the characteristic of the training biometric feature is a right hand, a left hand, a left and right hand, a foreside of a hand and/or a backside of a hand, wherein if the biometric feature is a foot, the characteristic of the training biometric feature is a right foot, a left foot, a left and right foot, a foreside of a foot and/or a backside of a foot.

10. Computer-implemented method according to one of claims 1-9, wherein the hierarchical labeling comprises a number of levels of hierarchy, wherein a level of hierarchy comprises a class of object of the biometric feature, wherein if a level of hierarchy is higher than a another level of hierarchy, a class of object of the other level of hierarchy is comprised in a class of object of the level of hierarchy.

11. Computer-implemented method according to claim 10, wherein the hierarchical labeling comprises two levels of hierarchy, wherein a first level of hierarchy comprises a first class of object and a second level of hierarchy comprises a second class of object, wherein, optionally, if the biometric feature is a hand, the first class of object is a hand and the second class of object is a finger or a fingertip, wherein, optionally, if the biometric feature is a foot, the first class of object is a foot and the second class of object is a toe or a toe tiptip.

12. Computer-implemented method according to claim 10, wherein the hierarchical labeling comprises three levels of hierarchy, wherein a first level of hierarchy comprises a first class of object, a second level of hierarchy comprises a second class of object and a third level of hierarchy comprises a third class of object, wherein, optionally, if the biometric feature is a hand, the first class of object is a hand, the second class of object is a finger and the third class of object is a fingertip, wherein, optionally, if the biometric feature is a foot, the first class of object is a foot, the second class of object is a toe and the third class of object is a toetip.

13. Computer-implemented method according to one of claims 1 to 12, wherein the neural network is further trained based on at least one cost function, wherein the cost function comprises at least one of a first cost function for determining a region of interest of a biometric feature and classifying whether the region of interest is part of a forehand or a back hand, a second cost function for determining a hand and classifying the hand as a backside of a hand or a foreside of a hand, a third cost function for determining whether the image comprises a left hand, a right hand or a left and a right hand.

14. Computing device comprising a processor, a storage device and an image sensor, wherein computer-readable instructions are stored on the storage device which, when executed, cause the computing device to perform the method according to one of claims 1 to 13.

15. Computing device according to claim 14, wherein the computing device is a mobile computing device.
